# EUROPÄISCHE PATENTSCHRIFT

(11) **EP 0 879 083 B1**
(45) Veröffentlichungstag und Bekanntmachung des Hinweises auf die Patenterteilung: **15.01.2003**
(21) Anmeldenummer: 96911955.1
(22) Anmeldetag: 28.03.1996
(51) Int. Cl.: B01F 5/06

(54) **VORRICHTUNG ZUM MISCHEN KLEINER FLÜSSIGKEITSMENGEN**
DEVICE FOR MIXING SMALL QUANTITIES OF LIQUIDS
DISPOSITIF DE MELANGE DE PETITES QUANTITES DE LIQUIDES

(30) Priorität: 30.03.1995 DE 19511603
(43) Veröffentlichungstag der Anmeldung: 25.11.1998
(60) Teilanmeldung: 02012479.8
(73) Patentinhaber: MERCK PATENT GmbH, 64293 Darmstadt (DE)
(72) Erfinder: SCHWESINGER, Norbert, D-98693 Ilmenau (DE); FRANK, Thomas, D-98693 Ilmenau (DE)
(74) Vertreter: Katscher, Helmut, Dipl.-Ing.
(86) Internationale Anmeldenummer: EP9601359
(87) Internationale Veröffentlichungsnummer: WO96030113

(56) Entgegenhaltungen:
- EP-A- 0 495 169
- DE-A- 2 031 772
- FR-A- 2 262 552
- FR-A- 2 407 019
- US-A- 4 112 520
- US-A- 4 222 671
- US-A- 4 971 450

## Beschreibung

Die Erfindung betrifft ein Verfahren zum Mischen kleinster Flüssigkeitsströme, die in Mikrokanälen fließen, wobei in mehreren aufeinanderfolgenden Mischschritten jeweils ein Flüssigkeitsstrom längs mindestens einer sich in Strömungsrichtung erstreckenden Trennebene in mindestens zwei Teilströme aufgeteilt wird und die Teilströme längs mindestens einer sich in Strömungsrichtung erstreckenden Zusammenflussebene zu einem dem nächsten Mischschritt zugeführten Flüssigkeitsstrom zusammengefügt werden.

Bekannte Verfahren zum Mischen von Flüssigkeitsströmen basieren oft auf einem nach Möbius benannten Mischprinzip (Mensinger et al, "Microreactor with integrated static mixer and analysis system", Proceedings Mikro Total Analysis Systems, 1994, Seiten 237-243, ISBN 0-7923-3217-2). Ein Flüssigkeitsstrom wird dabei in zwei Teilströme aufgeteilt, von denen ein Teilstrom relativ zu dem zweiten Teilstrom vor dem Zusammenführen verdreht wird. Dieser Mischschritt kann mehrfach hintereinander wiederholt werden und erzeugt jeweils neue Grenzflächen innerhalb des zusammengeführten Flüssigkeitsstroms. Eine kontrollierte Rotation eines Teilstroms um seine Strömungsrichtung ist bei kleinsten Flüssigkeitsströmen nicht durchführbar, weshalb dieses Verfahren nicht zum Mischen kleinster Flüssigkeitsmengen verwendet werden kann.

Es ist auch ein Verfahren zum Mischen größerer Mengen körniger Materialien bekannt (FR-A-2 262 552), bei welchem zuvor getrennte Teilströme seitlich versetzt wieder zusammengeführt werden. Dieses Verfahren ist jedoch nur für größere Teilströme bestimmt und geeignet, aber nicht im Mikrobereich umsetzbar.

Aufgabe der Erfindung ist es demzufolge, ein Verfahren zum Mischen so zu gestalten, dass auch kleinste Flüssigkeitsmengen effizient gemischt werden.

Diese Aufgabe wird erfindungsgemäß dadurch gelöst, dass in den aufeinanderfolgenden Mischschritten jeweils die Zusammenflussebene gegenüber der vorangehenden Trennebene um 90° gedreht ist, dass die Flüssigkeitsströme innerhalb eines Mischschritts in Mikrokanälen geführt werden, die sich auf getrennten Substratschichten befinden und dass die aufgeteilten Teilströme beim Zusammenfügen durch Durchbrüche zu einer nächsten Ebene und durch einen Verbindungskanal geführt werden, der sich in dieser Ebene befindet.

Das Verfahren ist an die Herstellungs- und Bearbeitungsmöglichkeiten der Mikrotechnik und Mikrostrukturierung angepasst und erlaubt eine einfache und kostengünstige Umsetzung. Insbesondere die verfahrensgemäße Führung der Teilströme in ebenen Flächen erlaubt eine direkte Umsetzung durch mikrostrukturierbare Materialien.

Die Anordnung der Trennebenen und Zusammenflussebenen in einem einzelnen Mischschritt sowie bei mehreren Mischschritten hintereinander führt schon nach wenigen Mischschritten zu einer effizienten Durchmischung auch kleinster Flüssigkeitsmengen.

Die Erfindung betrifft auch eine Vorrichtung zum Mischen kleinster Flüssigkeitsmengen mit Mikrokanälen, bestehend aus mindestens einem Mischelement mit mindestens einem Einlasskanal und mit mindestens einem Auslasskanal, wobei sich in jedem Mischelement der Einlasskanal längs mindestens einer sich in Strömungsrichtung erstreckenden Trennebene in mindestens zwei Zweigkanäle verzweigt, die längs mindestens einer sich in Strömungsrichtung erstreckenden Zusammenflussebene zu dem Auslasskanal zusammengeführt sind.

Vorrichtungen zum Mischen von Flüssigkeiten sind im Stand der Technik in Form von statischen und dynamischen Mischern bekannt.

Statische Mischer bestehen meist aus Rohrsystemen mit festen Einbauten. Durch die Nutzung der kinetischen Energie einer strömenden Flüssigkeit, wird diese nach einem bestimmten Fließweg homogenisiert.

Dynamische Mischer besitzen rotierende Mischwerkzeuge. Diese bringen die Mischenergie in das Mischgut und bewirken die Homogenisierung. Wegen der Größe der Ausrüstungen sind derartige Mischer nur für große Flüssigkeitsmengen einsetzbar. Die entstehenden End- oder Zwischenprodukte werden häufig jedoch nicht in dieser Menge benötigt.

Durch extreme Verkleinerung der Reaktionsumgebung wurde versucht Anordnungen zu schaffen, die ein Mischen bei geringem Materialeinsatz ermöglichen. Solche Mischer arbeiten als statische Mischer zum homogenen Vermischen kleiner Flüssigkeitsmengen nach dem Prinzip der Diffusion von Flüssigkeitsteilchen. In (Branebjerg et al, "Application of miniature analyzers: From microfluidic components to µTAS", Proceedings Mikro Total Analysis Systems, 1994, Seiten 141-151, ISBN 0-7923-3217-2) ist eine Vorrichtung beschrieben, bei der die Flüssigkeiten durch enge Kanäle fließen und sich nach entsprechend langen Strömungswegen durch Diffusion vermischen. Als nachteilig erweisen sich bei diesen Anordnungen der hohe Druckverlust und der geringe Wirkungsgrad.

Eine weitere Bauart statischer Mischer ist in (Proceedings Mikro Total Analysis Systems, 1994, Seite 79, ISBN 0-7923-3217-2) beschrieben. Diese Anordnung weist eine Vielzahl von Düsen auf, durch welche die zu vermischenden Flüssigkeiten ineinander gepresst werden. Auch bei diesen Ausführungen sind der hohe Druckverlust und der geringe Wirkungsgrad nachteilig.

Es sind ferner Mischer bekannt, die eine komplizierte Form der Kanäle aufweisen und bei denen durch Einbauten eine Drehung und damit eine Vermischung der Flüssigkeit bewirkt werden soll, wobei nachteiliger Weise nach jedem Mischelement eine Aufteilung der Flüssigkeit erfolgt und nach dem Folgeelement die Aufteilung wieder zu einer mechanischen Entmischung der Flüssigkeit führt (Mensinger et al, "Microreactor with integrated static mixer and analysis system", Proceedings Mikro Total Analysis Systems, 1994, Seiten 237-243, ISBN 0-7923-3217-2). Die bekannten Mischer für kleine Flüssigkeitsmengen sind entweder sehr kompliziert aufgebaut oder sie haben einen sehr geringen Wirkungsgrad. Zu diesen Mischern zählt auch die in dieser Literaturstelle ebenfalls beschriebene Ausführung eines Möbius-Mischers. Das Mischprinzip dieses Mischers besteht in der Auftrennung des Flüssigkeitsstroms an einer gedachten Trennungslinie, einer Verdrehung beider erhaltenen Teilströme im Uhrzeigersinn oder entgegengesetzt zum Uhrzeigersinn um 90° und einer erneuten Aneinanderschichtung der Teilströme zu einem Flüssigkeitsstrom. Beliebig viele Elemente eines solchen Möbius-Mischers können hintereinandergeschaltet sein.

Nachteilig ist bei diesem Mischer, dass zu seiner Herstellung in die Oberfläche von geeigneten Substraten aufwendig gewundene Kanalstrukturen eingebracht werden müssen, die das Verdrehen des Flüssigkeitsstroms in einem Mischvorgang um je 90° ermöglichen sollen. Derartige Kanalstrukturen sind im Mikrobereich nur mit enorm hohen Aufwand herstellbar. Insbesondere durch Versuche hat sich eine nicht optimale Durchmischung von Flüssigkeiten gezeigt. Dies ist darauf zurückzuführen, dass im Mikrobereich kleinste Flüssigkeitsmengen nicht den im Makrobereich bekannten Strömungsgesetzen folgen und sich deshalb die getrennten Flüssigkeitsströme nicht entsprechend dem Verlauf der Kanalgeometrie drehen und so die theoretische Aneinanderschichtung der Flüssigkeitsschichten in veränderter Reihenfolge nicht erfolgt.

Eine besondere Ausführungsform eines statischen Mischers, welcher für das Vermischen viskoser polymerer Substanzmischungen oder Lösungen geeignet ist, ist in EP 0 495 169 A1 beschrieben. dieser Mischer weist relativ dünne, direkt übereinander angeordnete Platten auf, welche Öffnungen und Kanäle aufweisen, um den Flüssigkeitsstrom aufzuspalten, in verschiedene Richtungen zu führen und anschließend in einer Ausgangsöffnung wieder zu vereinigen.

In US-A-4,971,450 erfolgt das Vermischen indem die Flüssigkeit in verschiedene Rohröffnungen geführt wird, deren Eingänge in einer Ebene nebeneinander liegen. Die Rohre werden über eine kurze Wegstrecke in der Weise geführt, dass die Ausgänge wiederum in einer Ebene nebeneinander liegen, wobei jedoch diese Ebene senkrecht auf der Eingangsebene steht. Werden nun zwei solcher Vorrichtungen hintereinander angeordnet, erfolgt an den Übergängen ein Vermischen der Flüssigkeiten in den zwischen den Elementen sich bildenden Kammern.

In der Schrift Fr-A-2 262 552 ist eine Vorrichtung zum Vermischen von granuliertem Material beschrieben. Sie besteht aus mehreren hintereinander geschalteten Elementen, wobei jedes einzelne Element aus zwei Rohren aufgebaut ist, welche über die Länge eines Elements gegeneinander verdreht werden. Durch eine daran angepasste Änderung der Querschnittsflächen wird zu beiden Seiten des Elements eine im wesentlichen quadratische Gesamtquerschnittsfläche als Summe der beiden Rohrquerschnitte vorgegeben. Die durch die gemeinsame Seitenwand der beiden Rohre vorgegebene Trennebene zu Beginn des Elements steht senkrecht auf der Verbindungsebene am Ende des Elements, so dass eine Drehung der beiden Teilströme erreicht wird. Durch die Anordnung mehrerer Mischelemente hintereinander wird eine Mischung des Materials herbeigeführt. Die Vorrichtung ist für körniges, also rieselfähiges Material bestimmt, das allein auf Grund der Schwerkraft die einzelnen Mischelemente durchfällt. Die Konstruktion dieser Mischelemente lässt keine Verkleinerung in den Mikromaßstab zu. Die Schwerkraft ist bei kleinsten Flüssigkeitsmengen nicht ausreichend, um eine effektive Durchmischung zu gewährleisten.

Durch FR-A1-2 407 019 wird eine Vorrichtung zum Vermischen von zwei Flüssigkeiten beschrieben, die es erlaubt, sehr geringe Flüssigkeitsmengen zu vermischen. Die beschriebene Vorrichtung besteht aus einer unteren ebenen Platte, in die zwei Kanäle graviert sind. welche gegeneinander laufen, sich in einem Punkt vereinigen, in Form eines Kanals weiterverlaufen, um sich nach kurzer Wegstrecke wieder zu trennen und nach dem Durchlaufen einer buckelförmigen Schleife sich wieder zu einem Kanal zu vereinigen. Nach wiederholter Auftrennung des gemeinsamen Kanals in buckelförmigen Schleifen endet die Mischvorrichtung in einem Kanal. Die zwei zu vermischenden Flüssigkeiten werden durch Öffnungen in einer oberen, abdichtenden Platte in die zwei aufeinander zulaufenden Kanäle eingeführt und die erhaltene Flüssigkeitsmischung durch eine Öffnung in der oberen Platte, welche an das Ende des Kanals der Mischvorrichtung anschließt, abgeführt. Flüssigkeiten mit hoher Viskosität können mit dieser Vorrichtung nicht ausreichend durchmischt werden.

Der Erfindung liegt die Aufgabe zugrunde, eine Vorrichtung anzugeben, die bereits sehr kleine Flüssigkeitsmengen mit hoher Effizienz homogenisieren kann und die einfach herstellbar ist.

Diese Aufgabe wird erfindungsgemäß dadurch gelöst, dass in einem Mischelement jeweils die Zusammenflussebene gegenüber der Trennebene des selben Mischelements um 90° gedreht ist, dass von den Zweigkanälen ausgehend an den Zusammenflusselementen Durchbrüche zu einer nächsten Ebene ausgehen, die durch einen Verbindungskanal gebildet werden, der sich in dieser Ebene befindet, und dass von diesen Durchbrüchen neue Mischkanäle ausgehen und dass sich die Mikrokanäle jeder Ebene auf getrennten Substratschichten befinden.

Vorteilhafte Ausgestaltungen der erfindungsgemäßen Anordnung sind in den Unteransprüchen angegeben.

Die erfindungsgemäße Vorrichtung ist zum Vermischen kleinster Flüssigkeitsmengen mit hoher Effizienz geeignet und zeichnet sich durch eine sehr kleine Baugröße aus.

Die Herstellung der Mischelemente erfolgt mit mikrostrukturierbaren Werkstoffen. Vorzugsweise erfolgt ihre Herstellung, indem einkristallines Silizium oder strukturierbares Glas als Substratmaterial mit Hilfe von Mikrotechnologien strukturiert wird, und zwar werden in dem Silizium mit Hilfe mikrotechnischer Strukturierungsverfahren, wie chemische Ätzprozesse, Laserstrukturierungsverfahren, Fotoformprozesse, Sandstrahlen und dergleichen Mikrokanäle und Durchbrüche hergestellt. Durch Kombination mehrerer auf diese Weise strukturierter Substrate lassen sich verschiedenste Ausführungsformen der erfindungsgemäßen Vorrichtung herstellen. Dabei kann sich zwischen den Substraten eine Zwischenlage befinden, die Durchbrüche zur Verbindung zwischen den einzelnen Ebenen aufweist. Weiterhin können solche erfindungsgemäßen Vorrichtungen Abdeckungen aus Silizium oder aus Glas besitzen.

Einzelne Mischelemente können hintereinander oder übereinander angeordnet sein. Zwei aufeinander folgende Mischelemente können um einen beliebigen Winkel, vorzugsweise um 90°, gegeneinander verdreht angeordnet sein.

Die Erfindung wird im Folgenden anhand mehrerer Ausführungsbeispiele näher erläutert. In der zugehörigen Zeichnung zeigen:
Figur 1 die Ansicht eines Mischelements bestehend aus zwei strukturierten Substratschichten,
Figur 2 die Ansicht eines Mischelementes bestehend aus zwei strukturierten Substratschichten sowie der seitlichen Anordnung der Ein- und Auslasskanäle des Mischelementes,
Figur 3 die Ansicht eines Mischelementes bestehend aus zwei strukturierten Substratschichten sowie der Anordnung der Ein- und Auslasskanäle des Mischelementes in der oberen Substratschicht,
Figur 4 die Ansicht eines Mischelementes bestehend aus drei strukturierten Substratschichten,
Figur 5 die Ansicht eines Mischelementes zum Vermischen von mehr als zwei Fluiden, bestehend aus zwei strukturierten Substratschichten und seitlich angeordneten Ein- und Auslasskanälen und
Figur 6 die Ansicht eines Mischelements zum Vermischen von mehr als zwei Fluiden, bestehend aus zwei strukturierten Substratschichten und Ein- und Auslasskanälen, die in einer oberen Substratschicht angeordnet sind.

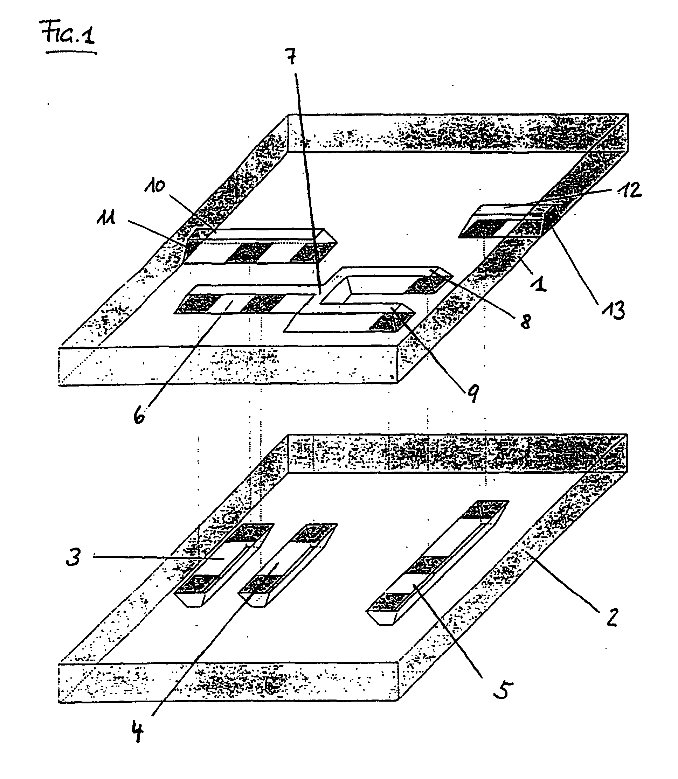

Eine konkrete Ausführungsform für ein Mischelement ist in Figur 1 gezeigt. Das Mischelement wird durch zwei als getrennte Substratscheiben ausgeführte Substratschichten 1 und 2 realisiert, die miteinander hermetisch dicht verbunden sind. In der Oberseite der Substratschicht 2, die eine horizontale Ebene darstellt, sind Mikrokanäle 3, 4 und 5 angebracht. Jeder dieser Mikrokanäle ist von den anderen Mikrokanälen 3, 4 und 5 in der Substratschicht 2 isoliert. In der Unterseite der Substratschicht 1, die ebenfalls eine horizontale Ebene darstellt, ist eine weitere Mikrokanalstruktur eingebracht, die verschiedene Abschnitte aufweist.

An einen gerade verlaufenden Abschnitt eines Mikrokanals 6 in der Substratschicht 1 schließt sich ein Verzweigungselement 7 an, dessen Trennebene sich vertikal in Strömungsrichtung erstreckt. Von diesem Verzweigungselement 7 gehen zwei parallel verlaufende Zweigkanäle 8 und 9 aus, die jeweils in den als Verbindungskanal ausgeführten Mikrokanal 5 der Substratschicht 2 münden. Auf Grund der Anordnung des quer zu den Zweigkanälen 8, 9 verlaufenden Mikrokanals 5 ist die Zusammenflussebene in der Substratschicht 2 um 90° gedreht gegenüber der Trennebene in der Substratschicht 1.

Die Zuordnung der Mikrokanäle 3, 4 der Substratschicht 2 zu einem Mikrokanal der Substratschicht 1 erfolgt dabei so, dass die Enden der Mikrokanäle 3, 4 unmittelbar mit dem Mikrokanal 6 in Berührung kommen. Weiterhin sind die Enden der Zweigkanäle 8, 9 so angeordnet, dass eine Überdeckung mit dem als Verbindungskanal ausgeführten Mikrokanal 5 der zweiten Substratschicht 2 möglich ist.

In der Unterseite der Substratschicht 1 befindet sich ein Einlasskanal 10, der die Enden der Mikrokanäle 3 und 4 in der Substratschicht 2 überdeckt. Dieser Einlasskanal 10 weist eine Eintrittsfläche 11 für die zu vermischenden Flüssigkeiten auf. Der Ausgang des Mischelementes wird durch den Auslasskanal 12 mit der Austrittsfläche 13 gebildet.

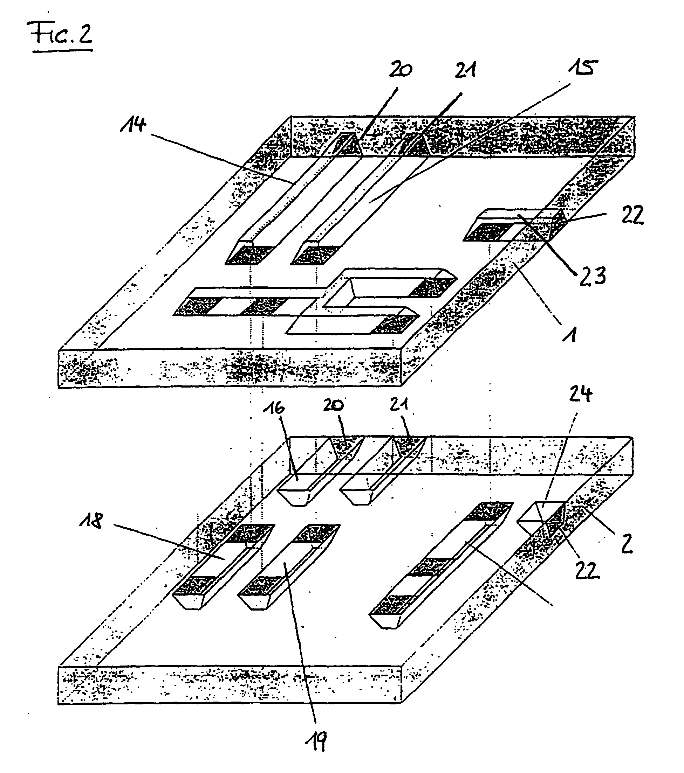

Eine zweckmäßige Anordnung von Einlasskanälen und Auslasskanälen ist in Figur 2 gezeigt. In der ersten Substratschicht 1 befinden sich die Mikrokanäle 14 und 15, welche sowohl die Mikrokanäle 16 und 17 in der zweiten Substratschicht 2 in ihrer Breite vollständig überdecken als auch mit ihren Enden die Mikrokanäle 18 und 19 der Substratschicht 2 ebenfalls überdecken. Gemeinsam mit den Mikrokanälen 14 und 15 der ersten Substratschicht 1 bilden die Mikrokanäle 16 und 17 der zweiten Substratschicht 2 Einlasskanäle 20 und 21 für die zu vermischenden Flüssigkeiten. Der Auslasskanal 22 wird durch die Überdeckung des Mikrokanals 23 in der ersten Substratschicht 1 und des Mikrokanals 24 in der zweiten Substratschicht 2 gebildet. Durch diese Überdeckung beider Mikrokanäle 23 und 24 entsteht ein gemeinsamer Auslasskanal 22.

Nicht bildlich dargestellt ist, dass zur fluidischen Kontaktierung in die Einlasskanäle 20 und 21 und den Auslasskanal 22 auch Kapillarröhrchen geschoben werden können, die an ihrem Umfang gegenüber den Substratschichten 1 und 2 abgedichtet sind.

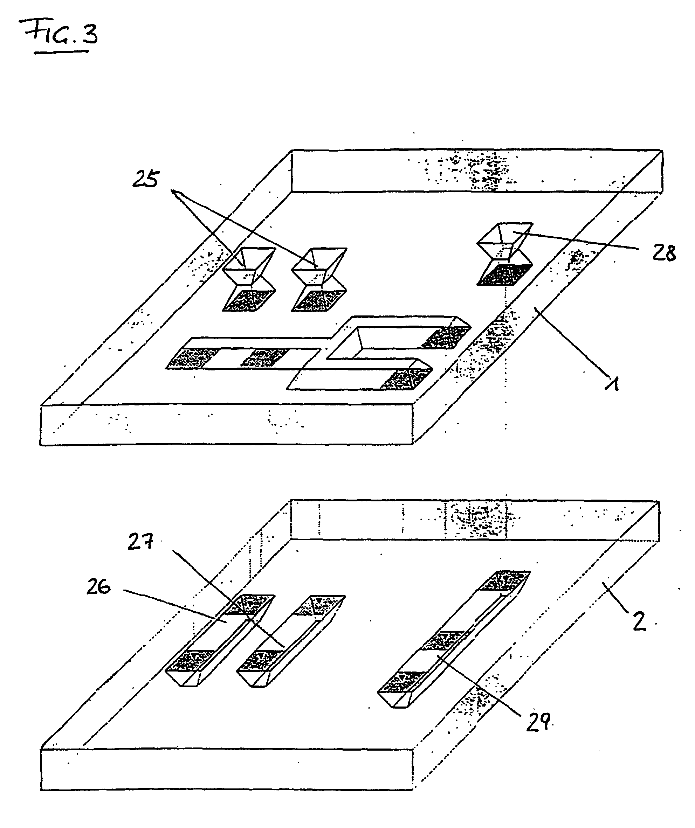

Eine weitere Möglichkeit der äußeren fluidischen Kontaktierung der Mikromischelemente ist in Figur 3 dargestellt. Die Substratschicht 1 besitzt ausgeformte Durchbrüche 25, welche die Enden der Mikrokanäle 26 und 27 in der Substratschicht 2 überdecken. Diese Durchbrüche 25 sind so ausgebildet, dass ein Zulauf der zu vermischenden Flüssigkeiten in das Mischelement möglich wird. Der Auslasskanal des Mischelementes wird ebenfalls von einem Durchbruch 28 in der Substratschicht 1 gebildet. Dieser Durchbruch 28 ist dabei so angeordnet, dass er das Ende des als Verbindungskanals ausgeführten Mikrokanals 29 in der Substratschicht 2 überdeckt.

Bildlich nicht dargestellt ist, dass auf der Oberfläche der Substratschicht 1 Rohre angeordnet sind, deren Eintrittsquerschnitt jeweils parallel zur Oberfläche der Substratschicht 1 angeordnet ist.

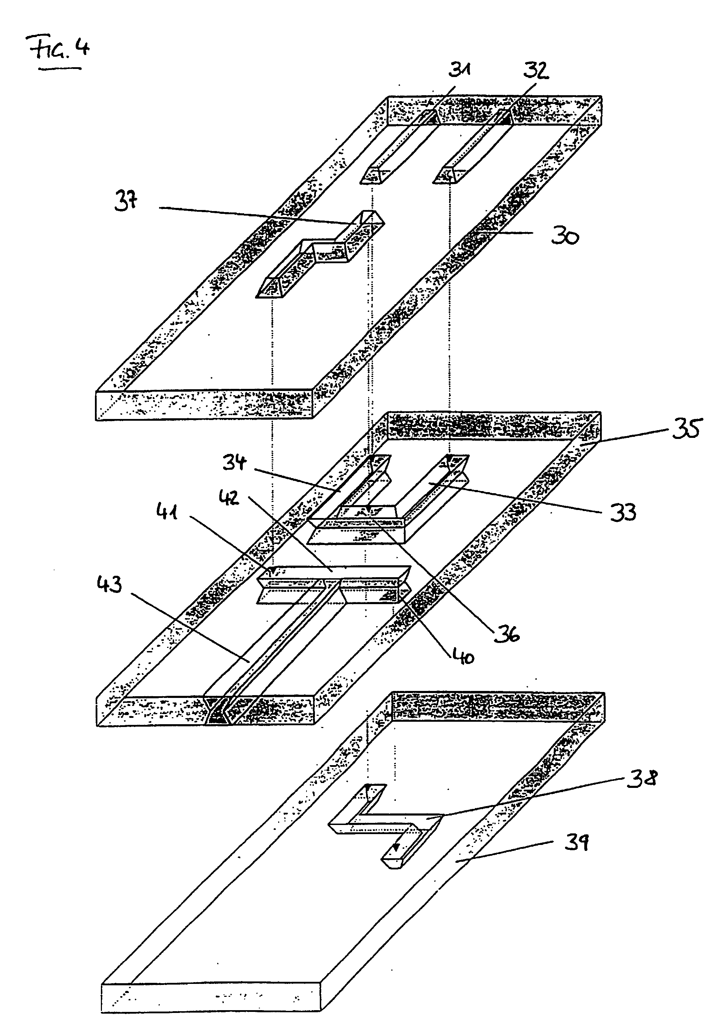

In einem weiteren Ausführungsbeispiel gemäß Figur 4 ist ein anderes Mischelement gezeigt, das aus insgesamt drei Substratschichten aufgebaut ist. In einer ersten Substratschicht 30 befinden sich Einlasskanäle 31 und 32. Die Enden dieser Einlasskanäle 31, 32 sind in Strömungsrichtung zu zwei Mikrokanalabschnitten 33 und 34 in einer zweiten Substratschicht 35 so angeordnet, dass es zu einer Überdeckung kommt. Die Mikrokanalabschnitte 33 und 34 münden in ein Zusammenflusselement 36. Das Zusammenflusselement 36 wird an seiner Oberseite von einem als Verbindungskanal ausgeführten Mikrokanal 37 der ersten Substratschicht 30 und an seiner Unterseite von einem als Verbindungskanal ausgeführten Mikrokanal 38 in einer dritten Substratschicht 39 überdeckt. Die Mikrokanäle 37 und 38 sind so geformt, dass in Strömungsrichtung gesehen deren jeweilige Endbereiche sich mit Mikrokanalabschnitten 40 und 41 in der zweiten Substratschicht 33 überdecken. Die Mikrokanalabschnitte 40 und 41 münden in einem Zusammenflusselement 42. Von diesem Zusammenflusselement 42 geht ein Auslasskanal 43 aus, mit welchem das Mischelement mit weiteren Mischelementen verbunden werden kann.

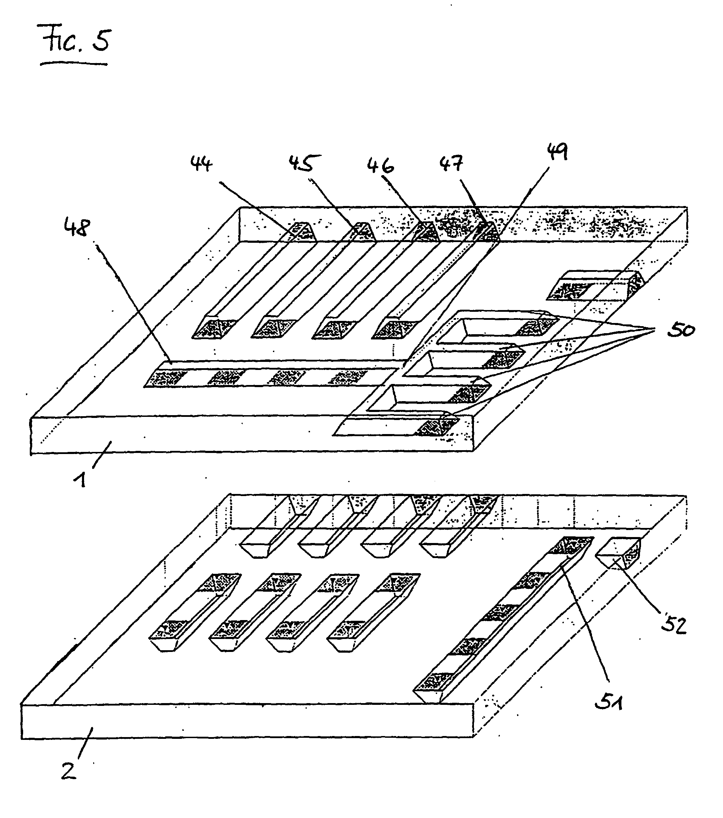

Figur 5 zeigt ein Mischelement, dass sich zum Mischen von mehr als zwei verschiedenen Flüssigkeiten eignet. Mehrere Mikrokanäle 44, 45, 46 und 47 sind als voneinander getrennte Einlasskanäle ausgebildet. Diese Mikrokanäle 44-47 münden in einen quer zu den parallel angeordneten Mikrokanälen 44-47 verlaufenden, in diesem Abschnitt als Verbindungskanal ausgeführten Mikrokanal 48, so dass im Mikrokanal 48 eine Übereinanderschichtung der einzelnen Flüssigkeitsströme erzwungen wird.

An einem Verzweigungselement 49 erfolgt eine Aufteilung des Mikrokanals 48 in die gleiche Anzahl von Zweigkanälen 50, wie Einlasskanäle für den Flüssigkeitseintritt ausgebildet sind. Die Zweigkanäle 50 sind durch einen Mikrokanal 51 an ihren Enden miteinander verbunden, wobei durch die Anordnung der Zweigkanäle 50 und des Mikrokanals 51 die einzelnen Zusammenflussebenen der Zweigströme jeweils um 90° gedreht gegen die Trennebene im Verzweigungselement 49 ist. Der Austritt wird durch einen Auslasskanal 52 gebildet.

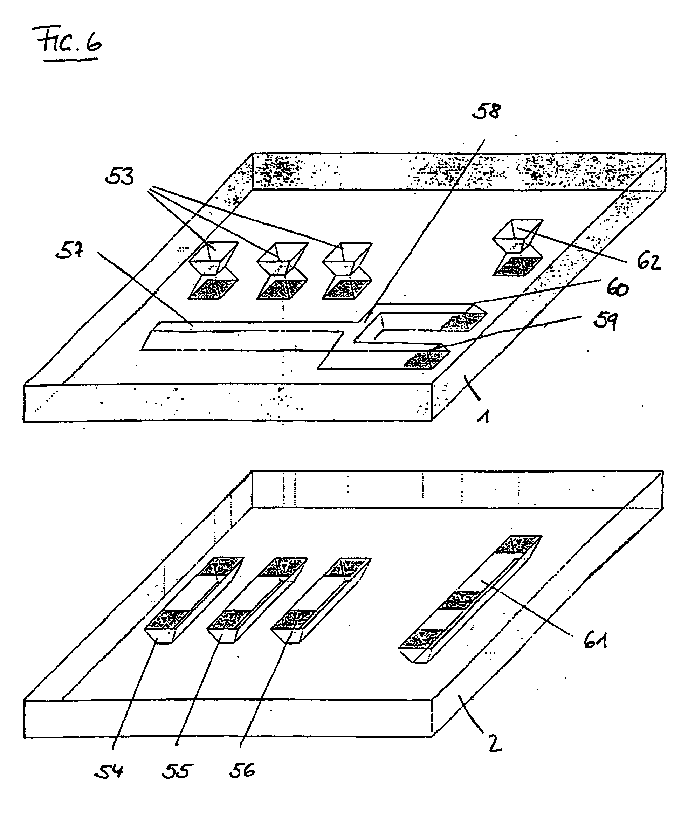

Figur 6 zeigt eine weitere Möglichkeit zum Mischen von mehr als zwei verschiedenen Flüssigkeiten. Die in der ersten Substratschicht 1 angeordneten Durchbrüche 53 sind als Einlasskanäle mit Mikrokanälen 54, 55 und 56 in der zweiten Substratschicht 2 des Mischelementes verbunden. Die Mikrokanäle 54, 55 und 56 münden an ihren Enden in den Mikrokanal 57 in der ersten Substratschicht 1 des Mischelementes ein. An dessen Ende befindet sich ein Verzweigungselement 58, von dem aus zwei Zweigkanäle 59 und 60 ausgehen, die in einen quer dazu verlaufenden Mikrokanal 61 in der zweiten Substratschicht 2 münden. An einem Ende des Mikrokanals 61 ist in der darüber befindlichen ersten Substratschicht 1 ein Durchbruch als Auslasskanal 62 aus dem Mischelement angeordnet.

### Bezugszeichenliste:

- 1,2 -: Substratschichten
- 3,4,5 -: Mikrokanäle
- 6 -: gerade verlaufender Abschnitt
- 7 -: Verzweigungselement
- 8, 9 -: Zweigkanäle
- 10 -: Einlasskanal
- 11 -: Eintrittsfläche
- 12 -: Auslasskanal
- 13 -: Austrittsfläche
- 14-19 -: Mikrokanäle
- 20, 21 -: Einlasskanäle
- 22 -: Auslasskanal
- 23, 24 -: Mikrokanäle
- 25 -: Durchbruch
- 26, 27 -: Mikrokanäle
- 28 -: Durchbruch
- 29 -: Mikrokanal
- 30 -: Substratschicht
- 31, 32 -: Einlasskanäle
- 33, 34 -: Mikrokanäle
- 35 -: Substratschicht
- 36 -: Zusammenflusselement
- 37, 38 -: Mikrokanäle
- 39 -: Substratschicht
- 40, 41 -: Mikrokanalabschnitte
- 42 -: Zusammenflusselement
- 43 -: Auslasskanal
- 44-47 -: Mikrokanäle
- 48 -: Mikrokanal
- 49 -: Verzweigungselement
- 50 -: Zweigkanäle
- 51 -: Mikrokanal
- 52 -: Auslasskanal
- 53 -: Durchbrüche
- 54-57 -: Mikrokanäle
- 58 -: Verzweigungselement
- 59, 60 -: Zweigkanäle
- 61 -: Mikrokanal
- 62 -: Auslasskanal

## Patentansprüche

1. Verfahren zum Mischen kleinster Flüssigkeitsteilströme, die in Mikrokanälen (3-5,14-19,23,24,29,33,34,37,38,44-48,51,54-57,61) fließen, wobei in mehreren aufeinanderfolgenden Mischschritten jeweils ein Flüssigkeitsstrom längs mindestens einer sich in Strömungsrichtung erstreckenden Trennebene in mindestens zwei Teilströme aufgeteilt wird und die Teilströme längs mindestens einer sich in Strömungsrichtung erstreckenden Zusammenflussebene zu einem dem nächsten Mischschritt zugeführten Flüssigkeitsstrom zusammengefügt werden, **dadurch gekennzeichnet, dass** in den aufeinanderfolgenden Mischschritten jeweils die Zusammenflussebene gegenüber der vorangehenden Trennebene um 90° gedreht ist, dass die Flüssigkeitsströme innerhalb eines Mischschritts in Mikrokanälen (3-5,14-19,23,24,29,33,34,37,38,44-48,51,54-57,61) geführt werden, die sich auf getrennten Substratschichten (1,2,30,35,39) befinden und dass die aufgeteilten Teilströme beim Zusammenfügen durch Durchbrüche (25,28,53) zu einer nächsten Ebene und einen die Durchbrüche verbindenden Verbindungskanal geführt werden, der sich in dieser nächsten Ebene befindet und daß dieser Verbindungskanal für ein mögliches, anschließendes Mischelement als Einlaßkanal verwendet wird.

2. Vorrichtung zum Mischen kleinster Flüssigkeitsmengen mit Mikrokanälen (3-5,14-19,23,24,29,33,34,37,38,44-48,51,54-57,61), bestehend aus mindestens einem Mischelement mit mindestens einem Einlasskanal (10,20,21,31,32) und mit mindestens einem Auslasskanal (12,22,43,52,62) wobei sich in jedem Mischelement der Einlasskanal (10,20,21,31,32) längs mindestens einer sich in Strömungsrichtung erstreckenden Trennebene in mindestens zwei Zweigkanäle (8,9,50,59,60) verzweigt, die längs mindestens einer sich in Strömungsrichtung erstreckenden Zusammenflussebene zu dem Auslasskanal (12,22,43,52,62) zusammengeführt sind, **dadurch gekennzeichnet, dass** in einem Mischelement jeweils die Zusammenflussebene gegenüber der Trennebene des selben Mischelements um 90° gedreht ist, dass von den Zweigkanälen (8,9,50,59,60) ausgehend an den Zusammenflusselementen (36,42) Durchbrüche (25,28,53) zu einer nächsten Ebene ausgehen, die durch einen Verbindungskanal verbunden sind, der sich in dieser nächsten Ebene befindet, und dass dieser Verbindungskanal für ein mögliches, anschließendes Mischelement den Einlaßkanal bildet und dass sich die Mikrokanäle (3-5,14-19,23,24,29,33,34,37,38,44-48,51,54-57,61) jeder Ebene auf getrennten Substratschichten (1,2,30,35,39) befinden.

3. Vorrichtung nach Anspruch 2, **dadurch gekennzeichnet, dass** die Auslasskanäle (12,22,43,52,62) in einer zur Ebene der Eingangskanäle parallelen Ebene verlaufen und über Durchbrüche (25,28,53) zwischen den Ebenen in die Ebene der Eingangskanäle zurückgeführt werden.

4. Vorrichtung nach Anspruch 2, **dadurch gekennzeichnet, dass** sich zwischen den Substratschichten (30,39) eine Zwischenlage (35) befindet, die Durchbrüche zur Verbindung zwischen den einzelnen Substratschichten (30,39) aufweist.

5. Vorrichtung nach Anspruch 2, **dadurch gekennzeichnet, dass** die von einem Zusammenflusselement (36,42) ausgehenden Auslasskanäle (12,22,43,52,62) gleichen Strömungswiderstand aufweisen.

6. Vorrichtung nach Anspruch 2, **dadurch gekennzeichnet, dass** eine Anzahl von Mischelementen in einer Ebene nacheinander angeordnet sind, wobei jeweils das folgende Mischelement gegenüber dem vorhergehenden Mischelement verdreht angeordnet ist.

7. Vorrichtung nach Anspruch 6, **dadurch gekennzeichnet, dass** das folgende Mischelement um 90° verdreht angeordnet ist.

8. Vorrichtung nach Anspruch 2, **dadurch gekennzeichnet, dass** das Substratmaterial einkristallines Silizium oder strukturierbares Glas ist, welches mit Hilfe von Mikrotechnologien strukturiert ist.

9. Vorrichtung nach Anspruch 2, **dadurch gekennzeichnet, dass** die Mikrokanäle (3-5,14-19,23,24,29,33,34,37,38,44-48,51,54-57,61) und die Durchbrüche (25,28,53) mit Hilfe mikrotechnischer Strukturierungsverfahren wie chemische Ätzprozesse, Laserstrukturierungsverfahren, Fotoformprozesse, Sandstrahlen und dergleichen herstellbar sind.

## Claims

1. Method for mixing extremely fine partial streams of liquid which flow in microchannels (3-5, 14-19, 23, 24, 29, 33, 34, 37, 38, 44-48, 51, 54-57, 61), in which, in a plurality of successive mixing steps, in each case one liquid stream is divided into at least two partial streams along at least one separating plane, which extends in the direction of flow, and the partial streams are combined along at least one confluence plane, which extends in the direction of flow, to form a liquid stream which is fed to the next mixing step, **characterized in that** in the successive mixing steps, the confluence plane is in each case rotated 90° with respect to the preceding separating plane, **in that** the liquid streams within a mixing step are guided in microchannels (3-5, 14-19, 23, 24, 29, 33, 34, 37, 38, 44-48, 51, 54-57, 61) which are located on separate substrate layers (1, 2, 30, 35, 39), and **in that** the divided partial streams, when they are brought together, are guided through openings (25, 28, 53) to a subsequent plane and through a connecting channel which connects the openings and is located in this subsequent plane, and **in that** this connecting channel is used as an inlet channel for a possible adjoining mixing element.

2. Device for mixing extremely small quantities of liquids, having microchannels (3-5, 14-19, 23, 24, 29, 33, 34, 37, 38, 44-48, 51, 54-57, 61), comprising at least one mixing element having at least one inlet channel (10, 20, 21, 31, 32) and having at least one outlet channel (12, 22, 43, 52, 62), the inlet channel (10, 20, 21, 31, 32) in each mixing element along at least one separating plane, which extends in the direction of flow, branching into at least two branch channels (8, 9, 50, 59, 60), which are brought together along at least one confluence plane, which extends in the direction of flow, to form the outlet passage (12, 22, 43, 52, 62), **characterized in that** in a mixing element the confluence plane is in each case rotated through 90° with respect to the separating plane of the same mixing element, **in that** starting from the branch channels (8, 9, 50, 59, 60), at the confluence elements (36, 42), openings (25, 28, 53) lead to a subsequent plane, which openings are connected by a connecting channel, which is located in this subsequent plane, and **in that** this connecting element forms the inlet channel for a possible adjoining mixing element, and **in that** the microchannels (3-5, 14-19, 23, 24, 29, 33, 34, 37, 38, 44-48, 51, 54-57, 61) of each plane are situated on separate substrate layers (1, 2, 30, 35, 39).

3. Device according to Claim 2, **characterized in that** the outlet channels (12, 22, 43, 52, 62) run in a plane parallel to the plane of the inlet channels and are fed back into the plane of the inlet channels via openings (25, 28, 53) between the planes.

4. Device according to Claim 2, **characterized in that** between the substrate layers (30, 39) there is an interlayer (35), which has openings for connection between the individual substrate layers (30, 39).

5. Device according to Claim 2, **characterized in that** the outlet channels (12, 22, 43, 52, 62) issuing from a confluence element (36, 42) have the same flow resistance.

6. Device according to Claim 2, **characterized in that** a number of mixing elements are arranged successively in one plane, the following mixing element being arranged in each case rotated relative to the preceding mixing element.

7. Device according to Claim 6, **characterized in that** the following mixing element is arranged rotated through 90°.

8. Device according to Claim 2, **characterized in that** the substrate material is single-crystalline silicon or structurable glass which is structured with the aid of microscopic techniques.

9. Device according to Claim 2, **characterized in that** the microchannels (3-5, 14-19, 23, 24, 29, 33, 34, 37, 38, 44-48, 51, 54-57, 61) and the openings (25, 28, 53) can be produced with the aid of microscopic structuring methods, such as chemical etching processes, laser structuring processes, photographic forming processes, sand blasting and the like.

## Revendications

1. Procédé pour mélanger d'infimes flots partiels de liquide qui s'écoulent dans des micro-canaux (3-5, 14-19, 23, 24, 29, 33, 34, 37, 38, 44-48, 51, 54-57, 61), moyennant quoi en plusieurs étapes de mélanges qui se suivent un flot de liquide se divise en au moins deux flots de liquide partiels tout en s'écoulant le long d'au moins un niveau de séparation positionné dans le sens de l'écoulement, et les flots partiels tout en s'écoulant le long d'au moins un niveau de convergence positionné dans le sens de l'écoulement rejoignent un flot de liquide qui est ajouté lors d'une des étapes de mélange suivantes, **caractérisé en ce que** lors de ces étapes de mélange qui se suivent, le niveau de convergence est à chaque fois tourné à 90° par rapport au niveau de séparation précédent, que les flots de liquide lors d'une étape de mélange sont acheminés par des micro-canaux (3-5, 14-19, 23, 24, 29, 33, 34, 37, 38, 44-48, 51, 54-57, 61) disposés sur des couches de substrats séparées (1, 2, 30, 35, 39) et que les flots partiels qui se sont divisés sont transportés par ouvertures (25, 28, 53) vers un niveau suivant quand ils se rencontrent, et par un canal de raccordement reliant les ouvertures entre elles situé à ce niveau suivant, et **en ce que** le canal de raccordement est utilisé comme canal d'admission pour un possible mélangeur suivant.

2. Dispositif pour mélanger des quantités de liquide infimes doté de micro-canaux (3-5, 14-19, 23, 24; 29, 33, 34, 37, 38, 44-48, 51, 54-57, 61), composé d'au moins un mélangeur avec au moins un canal d'admission (10, 20, 21, 31, 32) et au moins un canal d'évacuation (12, 22, 43, 52, 62), moyennant quoi dans chaque mélangeur le canal d'admission situé le long d'au moins un niveau de séparation positionné dans le sens de l'écoulement se divise en au moins deux branches (8, 9, 50, 59, 60), qui se rejoignent au canal d'évacuation (12, 22, 43, 52, 62) situé le long d'au moins un niveau de convergence positionné dans le sens de l'écoulement, **caractérisé en ce que** dans un mélangeur chaque niveau de convergence est tourné à 90° par rapport au niveau de séparation du même mélangeur, qu'à partir des branches (8, 9, 50, 59, 60), des ouvertures (25, 28, 53) finissant aux éléments de convergence (36, 42) mènent à un niveau suivant, reliées par un canal de raccordement qui se trouve à ce niveau suivant, et que ce canal de raccordement forme un canal d'admission pour un possible mélangeur suivant, et que les micro-canaux (3-5, 14-19, 23, 24, 29, 33, 34, 37, 38, 44-48, 51, 54-57, 61) de chaque niveau se trouvent sur des couches de substrats séparées.

3. Dispositif selon la revendication 2, **caractérisé en ce que** les canaux d'évacuation (12, 22, 43, 52, 62) sont situés à un niveau parallèle au niveau des canaux d'admission et sont renvoyés vers le niveau des canaux d'admission par des ouvertures (25, 28, 53) entre les niveaux.

4. Dispositif selon la revendication 2, **caractérisé en ce qu'**entre les couches de substrats (30, 39), il existe une couche intermédiaire (35) qui présente des ouvertures pour le raccordement entre les couches de substrats (30, 39) isolées.

5. Dispositif selon la revendication 2, **caractérisé en ce que** les canaux d'évacuation (12, 22, 43, 52, 62) partant d'un élément de convergence (36, 42) présentent la même résistance au courant.

6. Dispositif selon la revendication 2, **caractérisé en ce qu'**un nombre de mélangeurs placés l'un après l'autre est disposé sur un niveau, moyennant quoi chaque mélangeur suivant est disposé dans le sens inverse par rapport au mélangeur précédent.

7. Dispositif selon la revendication 6, **caractérisé en ce que** le mélangeur suivant est disposé à un angle de 90°.

8. Dispositif selon la revendication 2, **caractérisé en ce que** le matériau des substrats est du silicium monocristallin ou du verre pouvant être structuré, et qui est structuré à l'aide de microtechnologies.

9. Dispositif selon la revendication 2, **caractérisé en ce que** les micro-canaux (3-5, 14-19, 23, 24, 29, 33, 34, 37, 38, 44-48, 51, 54-57, 61) et les ouvertures peuvént être fabriqués à l'aide de procédés de microstructuration tels que procédés d'attaque chimique, procédés de structuration au laser, procédés Fotoform, sablages, et similaires.
